## Europäisches Patentamt
## European Patent Office
## Office européen des brevets

(11) Veröffentlichungsnummer: **0 025 512**
**B1**

(12) **EUROPÄISCHE PATENTSCHRIFT**

(45) Veröffentlichungstag der Patentschrift:
27.04.83

(51) Int. Cl.³: **C 08 L 55/02**, C 08 K 5/06

(21) Anmeldenummer: **80104767.1**

(22) Anmeldetag: **12.08.80**

(54) Schwer entflammbare Formmassen auf der Basis von ABS-Polymerisaten.

(30) Priorität: **22.08.79 DE 2933900**

(43) Veröffentlichungstag der Anmeldung:
**25.03.81 Patentblatt 81/12**

(45) Bekanntmachung des Hinweises auf die Patenterteilung:
**27.04.83 Patentblatt 83/17**

(84) Benannte Vertragsstaaten:
**BE FR GB IT NL**

(56) Entgegenhaltungen:

US-A-4 144 288
US-H-995 004

CHEMICAL ABSTRACTS, Band 86, 1977, Seite 566, Zusammenfassung Nr. 189450m Columbus, Ohio, US

CHEMICAL ABSTRACTS, Band 86, 1977, Seite 64, Zusammenfassung Nr. 91052h, Columbus, Ohio, US

Die Akte enthält technische Angaben, die nach dem Eingang der Anmeldung eingereicht wurden und die nicht in dieser Patentschrift enthalten sind.

(73) Patentinhaber: **Chemische Fabrik Kalk GmbH, Kalker Hauptstrasse 22 Postfach 91 01 57, D-5000 Köln 91 (DE)**

(72) Erfinder: **Jenkner, Herbert, Dr.Dipl.-Chem, Am Quechenhauf 8, D-5024 Pulheim 2 (DE)**
Erfinder: **Kerscher, Utto, Dr. Dipl.-Chem., Am Beissel 25, D-5042 Erftstadt (DE)**
Erfinder: **Büttgens, Walter, Petersbergstrasse 2, D-5340 Bad Honnef (DE)**
Erfinder: **Neukirchen, Ernst, Vorsterstrasse 75, D-5000 Köln 91 (DE)**

Schwer entflammbare Formmassen auf der Basis von ABS-Polymerisaten

Zur Brandschutzausrüstung von Acrylnitril-Butadien-Styrol-( = ABS)-Copolymerisaten wurden bereits zahlreiche Komponenten erprobt und beschrieben. Unter diesen haben sich nicht zuletzt die verschiedenen bromierten Diphenyläther sehr bewährt. So werden beispielsweise in der GB-PS 1 158 163 eine grössere Zahl von Kunststoffen, u.a. auch ABS-Copolymerisate, aufgeführt, die mit einer Reihe von Komponenten, welche zwei allgemeinen Formeln entsprechen, brandwidrig eingestellt werden können. Unter den möglichen Verbindungen wird auch Hexabromdiphenyläther genannt.

In der DE-AS 2 046 795 werden selbstverlöschende Formmassen aus ABS-Polymerisaten vorgeschlagen, die neben einer Antimon- und einer organischen Chlorverbindung einen bromierten Diphenyläther enthalten können. Als solcher wird beispielsweise Octabromdiphenyläther genannt.

Wie in den genannten Veröffentlichungen zu entnehmen ist, zeigen die mit solchen bromierten Diphenyläthern ausgerüsteten ABS-Polymerisate zufriedenstellende brandwidrige Eigenschaften. Weniger ausreichend sind jedoch vielfach deren übrige physikalischen Eigenschaften, beispielsweise Schlagzähigkeit, Zugfestigkeit oder Wärmeformbeständigkeit.

Damit war die Aufgabe gegeben, ABS-Copolymerisate zu finden, die neben einer guten Brandwidrigkeit keine oder nur geringe Veränderungen in wichtigen physikalischen Eigenschaften im Vergleich zu den nicht ausgerüsteten Polymerisaten zeigen.

Gegenstand der vorliegenden Erfindung sind schwer entflammbare Formmassen auf der Basis von ABS-Polymerisaten unter Verwendung von bromierten Diphenyläthern und Antimontrioxid als Brandschutzkomponenten. Die Formmassen zeichnen sich dadurch aus, dass sie als bromierte Diphenyläther Gemische enthalten, die aus 40 bis 50 Gew.-% Octabromdiphenyläther, 50 bis 40 Gew.-% Nonabromdiphenyläther, höchstens 10 Gew.-% Decabromdiphenyläther und höchstens 5 Gew.-% Heptabromdiphenyläther bestehen und deren Schmelzbereich zwischen 215 und 235°C liegt.

Es hat sich gezeigt, dass die hochbromierten Diphenyläther als Brandschutzkomponenten in ABS-Polymerisaten zwar eine gute Flammwidrigkeit bewirken, gleichzeitig aber, da ihr Schmelzpunkt über der Verarbeitungstemperatur dieser Kunststoffe liegt, durch Feststoffeinschlüsse die mechanischen Festigkeiten daraus hergestellter Formkörper deutlich verschlechtern. Niedriger bromierte Diphenyläther enthalten entsprechend weniger Brom. Für einen ausreichenden Brandschutz sind daher höhere Zusatzmengen erforderlich, die dann infolge des niedrigeren Schmelzpunktes die Wärmestandfestigkeit der Formmassen wesentlich verschlechtern. Demgegenüber werden durch die erfindungsgemäss zusammengesetzten Mischungen in gerade diesem speziellen Mischungsverhältnis schwer entflammbare ABS-Polymerisate erhalten, die bei guter Brandwidrigkeit keine oder nur sehr geringe Abweichungen in den physikalischen Eigenschaften gegenüber den ungeschützten Kunststoffen zeigen.

Zur Herstellung der erfindungsgemässen Formmassen werden ABS-Granulat und ein Gemisch bromierter Diphenyläther der beschriebenen Zusammensetzung im Verhältnis 10 bis 30 Gewichtsteile Diphenyläthergemisch auf 100 Gewichtsteile ABS-Granulat, wozu vorteilhaft noch 3 bis 10 Gewichtsteile Antimontrioxid gegeben werden können, auf einem Mischwalzwerk bei einer Temperatur von 170°C zu einem homogenen Fell verarbeitet. Das erhaltene Fell wird dann nach Abkühlung in einer Kunststoffmühle zu einem Bruchgranulat zerkleinert. Aus dem Bruchgranulat können dann auf den üblichen Verarbeitungsmaschinen Formkörper hergestellt werden. Diese Formkörper zeigen eine sehr gute und auch dauerhafte Brandwidrigkeit, da die erfindungsgemäss zu verwendenden Brandschutzkomponenten aus der Harzmasse nicht auswandern. Bezüglich ihrer physikalischen Eigenschaften unterscheiden sich die erfindungsgemässen Formkörper nur wenig von anderen Formkörpern, die aus entsprechenden, aber nicht ausgerüsteten Harzmassen hergestellt sind.

Einige Beispiele sollen die verschiedenen Eigenschaften der erfindungsgemässen Formmassen darstellen. Dazu wird auf einem Mischwalzwerk ein ABS-Granulat mit verschiedenen Gemischen bromierter Diphenyläther sowie mit Antimontrioxid bei einer Temperatur von 170°C zu einem homogenen Fell verarbeitet. Dabei kommen folgende Diphenyläthergemische zur Anwendung:

Gemisch I (erfindungsgemäss)

| | | | |
|---|---|---|---|
| 5 | Gew.-% | Heptabromdiphenyläther | |
| 48 | Gew.-% | Octabromdiphenyläther | Bromgehalt 80,7 Gew.-% |
| 40 | Gew.-% | Nonabromdiphenyläther | Schmelzbereich 215-235°C |
| 7 | Gew.-% | Decabromdiphenyläther | |

Gemisch II (nicht erfindungsgemäss)

| | | |
|---|---|---|
| 1,0 Gew.-% | Octabromdiphenyläther | Bromgehalt 83,2 Gew.-% |
| 1,5 Gew.-% | Nonabromdiphenyläther | Schmelzbereich 295-310°C |
| 97,5 Gew.-% | Decabromdiphenyläther | |

Gemisch III (nicht erfindungsgemäss)

| | | | |
|---|---|---|---|
| 78 | Gew.-% | Hexabromdiphenyläther | Bromgehalt 75,2 Gew.-% |
| 19 | Gew.-% | Heptabromdiphenyläther | Schmelzbereich 160-170°C |
| 3 | Gew.-% | Octabromdiphenyläther | |

Das erhaltene Fell wird nach dem Erkalten in einer Kunststoffmühle zu einem Bruchgranulat von 2 bis 5 mm Grösse zerkleinert. Aus dem Bruchgranulat werden auf einer Schneckenspritzgussmaschine bei einer Verarbeitungstemperatur von 240°C Normkörper gespritzt, wie sie für den Brandtest sowie die einzelnen physikalischen Prüfungen vorgeschrieben sind. Nachdem die Prüfkörper 24 Stunden bei Normklima = 23°C und 65% relativer Feuchte gelagert worden sind, werden folgende Prüfungen vorgenommen:

Brandtest nach UL 94

Schlagzähigkeit }
Kerbschlagzähigkeit }    nach DIN 53 435

Zugfestigkeit }
Reissdehnung }    nach DIN 53 455

Vicat-Erweichungstemperatur   nach DIN 53 460

In der nachfolgenden Tabelle entspricht die Probe 1 einer erfindungsgemässen Formmasse; die Proben 2 bzw. 3 enthalten die nicht erfindungsgemäss zusammengesetzten Diphenyläthergemische II bzw. III;

die Probe 4 enthält nur Antimontrioxid als Brandschutzmittel und die Probe 5 enthält keinerlei derartige Zusätze.

| Gewichtsteile | Probe | | | | |
|---|---|---|---|---|---|
| | 1 | 2 | 3 | 4 | 5 |
| ABS-Granulat | 410 | 410 | 410 | 475 | 500 500 |
| Gemisch I | 65 | — | — | — | — |
| Gemisch II | — | 65 | — | — | — |
| Gemisch III | — | — | 65 | — | — |
| Antimontrioxid | 25 | 25 | 25 | 25 | — |
| Brandkasse | V-0 | V-0 | V-2 | HB | HB |
| Schlagzähigkeit kJ/m$^2$ | o.B. | 51 | o.B. | o.B. | o.B. |
| Kerbschlagzähigkeit kJ/m$^2$ | 14 | 9 | 13,5 | 14 | 15 |
| Zugfestigkeit N/mm$^2$ | 40 | 37 | 39 | 40 | 42 |
| Reissdehnung m/m | 0,17 | 0,09 | 0,18 | 0,16 | 0,18 |
| Vicat-Erweichungstemperatur | 97°C | 99°C | 93°C | 99°C | 99°C |

o.B. = ohne Bruch

Wie die Versuchsergebnisse in vorstehender Tabelle zeigen, wird nur mit den Proben 1 und 2 ein zufriedenstellender Brandschutz erreicht. Dabei zeigt die Probe 2 einen deutlichen Rückgang der Festigkeiten, während die erfindungsgemässe Probe 1 in ihren mechanischen und thermischen Eigenschaften gegenüber der Nullprobe 5 nur minimale Rückgänge aufweist.

Eine röntgenographische Untersuchung von 1 mm starken Platten aus Mischungen entsprechend den Proben 1 bis 5, jedoch ohne Zusatz von Antimontrioxid, zeigt, dass die Platten entsprechend den Proben 1, 3, 4 und 5 keinerlei Einschlüsse in Form von Feststoffen zeigen, während in der Platte gemäss der Probe 2 deutliche Feststoffanteile erkennbar sind, die offenbar aus Decabromdiphenylätherteilchen bestehen, die bei der Verarbeitungstemperatur von 240°C nicht geschmolzen sind.

## Patentansprüche

1. Schwer entflammbare Formmassen auf der Basis von ABS-Polymerisaten unter Verwendung von bromierten Diphenyläthern und Antimontrioxid als Brandschutzkomponenten, dadurch gekennzeichnet, dass sie als bromierte Diphenyläther Gemische enthalten, die aus
40 bis 50 Gew.-% Octabromdiphenyläther,
50 bis 40 Gew.-% Nonabromdiphenyläther,
höchstens 10 Gew.-% Decabromdiphenyläther und
höchstens 5 Gew.-% Heptabromdiphenyläther bestehen und deren
Schmelzbereich zwischen 215 und 235°C liegt.

2. Formmassen nach Anspruch 1, dadurch gekennzeichnet, dass sie
10 bis 30 Gewichtsteile der Gemische bromierter Diphenyläther und
3 bis 10 Gewichtsteile Antimontrioxid auf 100 Gewichtsteile ABS-Polymerisat enthalten.

## Claims

1. Flame retardant compounds based on ABS polymers including brominated diphenyl ethers and antimony trioxide as flame retarding components, characterized by containing as brominated diphenyl ethers mixtures consisting of 40% to 50% by weight octabromdiphenyl ether, 50% to 40% by weight nonabromdiphenyl ether, a maximum of 10% by weight decabromdiphenyl ether and a maximum of 5% by weight heptabromdiphenyl ether, and having a melting range between 215 and 235°C.

2. Compounds as in claim 1, characterized by containing 10 to 30 parts by weight of the mixture of brominated diphenyl ethers and 3 to 10 parts by weight antimony trioxide on 100 parts by weight polymer.

**Revendications**

1. Matières à mouler difficilement inflammables à base de polymérisats d'ABS mettant en oeuvre des éthers diphényliques bromés et du trioxyde d'antimoine comme composants de protection contre l'incendie, caractérisé en ce que, en tant qu'éthers diphényliques bromés ils contiennent des mélanges qui sont au plus composés de 40 à 50% en poids d'éther octabrome-diphenylique et au plus de 50 à 40% en poids d'éther nonabrome-diphénylique, au plus de 10% en poids d'éther decabrome-diphénylique et au plus de 5% en poids d'éther heptabrome-diphénylique et dont le domaine de fusion se situe entre 215 et 235°C.

2. Matières à mouler conformes à la revendication 1, caractérisés en ce qu'ils contiennent de 10 à 30 parties en poids des mélanges d'éthers diphényliques bromés et de 3 à 10 parties en poids de trioxyde d'antimoine sur 100 parties en poids de polymérisat ABS.